(19) **European Patent Office**

Europäisches Patentamt

Office européen des brevets

(11) **EP 1 464 210 B1**

(12) **EUROPEAN PATENT SPECIFICATION**

(45) Date of publication and mention
of the grant of the patent:
**27.09.2006 Bulletin 2006/39**

(51) Int Cl.:
*H05H 15/00* (2006.01)    *G21G 1/10* (2006.01)

(21) Application number: **03728211.8**

(22) Date of filing: **19.05.2003**

(86) International application number:
**PCT/UA2003/000015**

(87) International publication number:
**WO 2004/017685 (26.02.2004 Gazette 2004/09)**

(54) **METHOD AND DEVICE FOR COMPRESSING A SUBSTANCE BY IMPACT AND PLASMA CATHODE THEREFOR**

VERFAHREN UND VORRICHTUNG ZUM SCHLAG-VERDICHTEN EINES STOFFES UND PLASMAKATHODE DAZU

PROCEDE ET DISPOSITIF DE COMPRESSION D'UNE SUBSTANCE PAR IMPACT ET CATHODE A PLASMA

(84) Designated Contracting States:
**AT BE BG CH CY CZ DE DK EE ES FI FR GB GR HU IE IT LI LU MC NL PT RO SE SI SK TR**

(30) Priority: **14.08.2002 WOPCT/UA02/86722**

(43) Date of publication of application:
**06.10.2004 Bulletin 2004/41**

(73) Proprietors:
• **LTD Company "Proton-21"**
  **Kievskaya obl. 08132 (UA)**
• **Adamenko, Stanislav Vasilyevich**
  **Kiev, 03124 (UA)**

(72) Inventor: **ADAMENKO, Stanislav Vasilyevich**
**Kiev, 03124 (UA)**

(74) Representative: **Benatov, Emil Gabriel**
**Bl. 36B,**
**Liuliakova gradina Str.**
**1113 Sofia (BG)**

(56) References cited:
• **VYSOTSKII V I ET AL: "Creating and using of superdense micro-beams of relativistic electrons" INTERNATIONAL SYMPOSIUM ON NEW VISIONS IN LASER-BEAM INTERACTIONS: FUNDAMENTAL PROBLEMS AND APPLICATIONS OF LASER-COMPTON SCATTERING, TOKYO, JAPAN, 11-15 OCT. 1999, vol. 455, no. 1, pages 123-127, XP004238304 Nuclear Instruments & Methods in Physics Research, Section A (Accelerators, Spectrometers, Detectors and Associated Equipment), 21 Nov. 2000, Elsevier, Netherlands ISSN: 0168-9002 cited in the application**
• **DATABASE WPI Section EI, Week 199609 Derwent Publications Ltd., London, GB; Class V05, AN 1996-086109 XP002252565 & SU 1 545 826 A (NUCLEAR RES INST), 20 July 1995 (1995-07-20) cited in the application**
• **ADAMENKO S ET AL: "Effect of auto-focusing of the electron beam in the relativistic vacuum diode" PROCEEDINGS OF THE 1999 PARTICLE ACCELERATOR CONFERENCE (CAT. NO. 99CH36366), PROCEEDINGS OF THE 1999 PARTICLE ACCELERATOR CONFERENCE, NEW YORK, NY, USA, 27 MARCH-2 APRIL 1999, pages 3271-3273 vol.5, XP002252564 1999, Piscataway, NJ, USA, IEEE, USA ISBN: 0-7803-5573-3 cited in the application**
• **DATABASE WPI Section EI, Week 198719 Derwent Publications Ltd., London, GB; Class S03, AN 1987-133993 XP002252566 & SU 1 215 597 A (BATSANOV S S), 30 September 1986 (1986-09-30)**

- **ASTRELIN V T ET AL: "Calculations on the formation and transport of intense electron beams" ZHURNAL TEKHNICHESKOI FIZIKI, NOV. 1988, USSR, vol. 58, no. 11, pages 2168-2173, XP008021184 ISSN: 0044-4642**
- **ASTRELIN V T ET AL: "PERFORMANCE OF A MAGNETRON DIODE WITH A MULTITIP EXPLOSIVE-EMISSION CATHODE" SOVIET PHYSICS TECHNICAL PHYSICS, AMERICAN INSTITUTE OF PHYSICS. NEW YORK, US, vol. 33, no. 3, 1 March 1988 (1988-03-01), pages 351-354, XP000048033**

**Description**

*Field of Invention*

This invention relates:

to a method for impact compression of a condensed (liquid or, preferably, solid) substance to a superdense state in which pycnonuclear processes and inertial confinement fusion (ICF hereafter) may proceed, and
to a structure of devices based on relativistic vacuum diodes (RVD hereafter) including plasma cathodes, designed for carrying out the said method.

This technology is intended practically for transmutation of atomic nuclei of certain chemical elements into nuclei of other chemical elements with the purpose of:

Experimentally obtaining preferably stable isotopes of chemical elements including synthesis of stable transuranides;
Reprocessing radioactive waste containing long-lived isotopes into materials containing short-lived isotopes and/or stable isotopes, which is particularly important in decontamination of used gamma-ray sources, e.g., based on radioactive isotopes of cobalt widely used in industry and medicine.

In future, this method may be useful for obtaining energy by the ICF with utilization of preferably solid targets.
For the purpose of this description, the following terms as employed herein and in the appended claims refer to the following concepts:

*"target"* is a once used for impact compression dose of at least one arbitrary isotope of at least one chemical element, being a raw material for obtaining products of nuclear transformations and, optionally, a primary energy carrier for energy producing;
*"impact compression"* is an isoentropic impact action of a self-focusing converging density wave on at least a part of a target;
*"superdense state"* is such a state of at least a part of the target after it has been compressed by impact, at which state a substantial portion of the target substance transforms into electron-nuclear and electron-nucleonic plasma;
*"pycnonuclear process"* is such a recombinational interaction ('cold' in particular) between components of electron-nuclear and electron-nucleonic plasma of the target substance compressed to a superdense state causing at least the target isotopic composition change;
*"plasma cathode"* is such a consumable axisymmetric part of the RVD negative electrode which is able (in the beginning of the discharge pulse) to generate plasma shell (of the material of the near-surface layer) with the near zero electron work function;
*"anode-enhancer"* is such once used replaceable axisymmetric part of the RVD anode which may be completely produced of preferably conductive (in the main) material and used as a target itself in the simplest demonstration experiments, or has the shape of at least a single-layer shell of a hard strong material inside of which a selected target is fixed also axisymmetrically providing the acoustic contact, when such anode-enchancer is used for industrial needs;
*"focal space"* is such a volume in the RVD vacuum chamber which spatially confines a certain length of the common geometric symmetry axis of the RVD electrodes and in which (in the absence of obstacles and under pre-set values of the area of the emitting surface of the plasma cathode, energy of electrons and current density) a pinch of electron beam is possible due to collective self-focussing of relativistic electrons.

*Background Art*

It is well known theoretically (see, e.g., U.S. Pat. No. 4,401,618) that in order to carry out a controlled nuclear fusion, it is necessary and sufficient:

First, to make a target of a microscopic size, the mass of which is usually of several micrograms to several milligrams,
Second, to fix the formed target in a space,
Third, to transfer a target substance into a superdense state by as uniform as possible impact compression of the target,
Fourth, to hold the substance of the target in such state the time enough for transmutation and/or nuclear fusion of atoms, which can be accompanied by energy release or absorption.

Worth to be mentioned that said limitations of the target mass are important mainly for the ICF because 1 mg of deuterium or a mixture of deuterium and tritium has an energy equivalent of about 20-30 kg of trinitrotoluene.

Also theoretically obvious is the fact that transmutation and/or nuclear fusion occur actually simultaneously with the attainment of a superdense state. Therefore, the efforts of researchers in the field of nuclear physics have been directed to the creation of most efficient methods and means for impact compression of substances so far.

And, finally, it is also theoretically clear that:

such a compression is possible only under the conditions of generating a high-power mechanical impulse of the duration order of several tens of nanoseconds and focussing this impulse onto a substantial area (up to the whole) of the surface of a target located in a securely isolated from the environment volume,

means for space-time compression of an energy flux are required for that purpose, such as primary energy source, at least one energy storage, at least one converter for transforming the accumulated energy into a mechanical impact impulse, and a mechanical striker for essentially isoentropic transfer of this impulse onto the target,

the problem of a sufficient set of such means and interactions between them can be solved in different ways depending on the purposes of the experiments with the impact compression of a substance provided that (when connected to an industrial power network) the first but not the only energy storage is usually a device based on a LC-circuit (see, *e.g.*, collected articles: *Energy Storage, Compression and Switching,* edited by W.H. Bostick, V. Nardy and O.S.F. Zucker. Plenum Press, New York and London).

For years, efforts to realize said theoretical assumptions in practice had been directed only to the ICF the industrial mastering of which seemed to be sufficient for the humanity to move to "energy paradise".

For this reason, only gaseous deuterium or deuterium and tritium were used as an active substance from the very beginning, and targets were produced in the shape of tight empty spheres filled with microscopic (about 0,1 mg) portions of said hydrogen isotopes. Then, the beams of laser drivers were pointed at each such target uniformly and synchronously from many sides.

Heating of the shell caused an ablation (partial evaporation) of its outer portion. The expansion of the evaporated material was giving rise to reactive forces which caused implosion, *i.e.* uniform compression of the inner portion of the shell and active substance of the target in the direction to the sphere center (see, *e.g.,* (1) US 4,401,618; (2) J. Lindl, *Phys. of Plasmas,* 1995; (3) K. Mima *et al., Fusion Energy,* 1996. IAEA, Vienna, V.3, p.13, 1996).

This ICF scheme seemed to be irreproachable. Actually, the duration of laser radiation pulses can be brought to about 1 ns. This could ensure efficient time compression of an energy flux, and a sharp decrease in the target surface area could be a prerequisite for the space compression of said flux as well.

Unfortunately, the efficiency of lasers does not exceed 5 %, that from very beginning made doubtable the effectiveness of the laser driver, taking into account Lawson criterion (J.D. Lawson, Proc. *Phys. Soc.,* B.70, 1957). Further, the synchronization of lasers switching requires a sophisticated automatic control system. And, finally, the ablation is accompanied with significant losses in energy for heating the shell and target as a whole. Thus, nobody has brought so far the gaseous substance of the target to the superdense state and has got a positive yield of energy that could exceed the energy consumption for ICF initiation.

Known are the efforts to create the pressure and temperature sufficient to ignite fusion reactions by means of an acoustic driver, which must to induce cavitation in condensed, liquid in particular, targets (U.S. Patents Nos. 4,333,796; 5,858,104 and 5,659,173). Particularly, International Publication WO 01/39197 describes:

(1) a cavitation fusion reactor comprising:

at least one source of mechanical supersonic oscillations,
preferably a plurality of sound conductors capable of transmitting these oscillations into the confined body of a target in a resonance mode with an increase in the energy flux density per unit of area,
means for heat removal in the form of a suitable heat exchanger;

(2) such method of use of the described reactor, which includes:

producing targets poorly conducting sound by pressing a fuel material required for nuclear fusion, preferably titanium deuteride, or lithium deuteride, or gadolinium dideuteride, *etc.*, into a solid sound conducting matrix from a refractory metal (e.g. titanium, tungsten, gadolinium, osmium or molybdenum),
introducing at least one such matrix with at least one such target into acoustic contact with at least one sound conductor connected to the source of mechanical supersonic oscillations,
acting upon such matrix by a train of supersonic impulses in a resonance mode, which acting causes mechanical-and-chemical destruction of deuterides and fluidization of targets due to the conversion of kinetic energy of the mechanical oscillations into the heat and essentially simultaneously induces cavitation in the 'liquid' targets due to 'evaporation' of deuterium from the targets, i.e. appearance of vapor bubbles and their collapse under the pressure of the host material, and

terminating the process after nuclear fusion reactions with energy release inside the targets are completed.

Use of solid (in the initial state) targets and supersonic mechanical impulses for their impact compression seems to be rather attractive. Unfortunately, like lasers, the sources of ultrasound have insignificant efficiency. Moreover, unlike lasers, these sources yield rather small density of power in the impulse, which makes it necessary to put the system 'ultrasound source - deuteride target' in the resonance mode. However, even in this mode, the major portion of energy is spent for heating targets and dissipates. Therefore, impact compression of the substance to a superdense state was not achieved even in case of prolonged pumping of energy into the target.

Accordingly, the problem of creation of feasible methods and means for impact compression of the substance to a superdense state remains urgent.

Long-range approach to its solution is based on use of RVD known since the beginning of the 20th century (see, *e.g.*, (1) C.D. Child, *Phys. Rev.,* V.32, p.492, 1911; (2) I. Langmuir, *Phys. Rev.,* V.2, p.450, 1913).

Each RVD comprises a vacuum chamber inside of which a cathode and an anode are fixed, said cathode and anode are connected to an electric charge storage via a pulse discharger. With a sufficiently great charge and a short duration of a discharge pulse, such diodes are capable of providing an explosive electron emission from the surface of the cathode and acceleration of electrons to relativistic velocity with the efficiency of more than 90%.

Exactly in this function of generators and accelerators of powerful electron beams, the relativistic vacuum diodes had been the object of attention of physicists during the whole 20th century, and numerous enhancements to the design of such diodes as the whole and particularly cathodes for them were intended for the space-time compression of energy in the electron beams and shaping these beams to required spatial form.

An effort in creation of a method for compressing a substance by impact in the RVD for ICF is known from US 3,892,970. This method includes:

First, producing a target in the shape of a symmetric pellet of a condensed (preferably solid) substance from a frozen thermonuclear fuel (*i.e.* deuterium or a mixture of deuterium and tritium),

Second, placing the target between the RVD electrodes, in other words, into the volume, into which the output of means for anode plasma generation is opened, and

Third, practically synchronous injection an anode plasma and compression of the target with impulse (at 10 ns) annular impact by means of short-circuit of a powerful current (the order of 100 TW and the energy of 1 MJ) via the anode plasma.

However, such method does not provide the compression of the target substance to a superdense state and holding it in such state long enough for nuclear fusion with energy release because the size of the target is obviously smaller than the path length of the electrons with the energy of about 1.5 MeV. That is why the kinetic energy of electrons practically immediately converts into thermal energy in the whole body of the target causing a spatial thermal explosion of the nuclear fuel. Further, it is extremely difficult in the known method to synchronize hitting of the freely flying target into the center of an annular RVD cathode with the discharge of the source of energy and producing a flat plasma anode. Accordingly, focussing of the electron current on the target can be achieved only occasionally despite of adjusting the discharge voltage and the anode plasma density.

An RVD based device for impact compression of a substance, known from the same patent, comprises a spherical vacuum chamber fitted with a heat exchanger and provided with a channel for targets feeding, two annular cathodes located symmetrically with respect to the central plane of the vacuum chamber, additional plasma injecting device located between the cathodes and forming a flat plasma anode directly prior to the discharge of the supplying circuit.

And finally, the known from the same patent cathode has a current carrying part and a focussing tip made in the shape of a ring with a sharp edge for increasing an electric field gradient thereon. The edge of such cathode is covered with its own layer of plasma during a discharge.

It is actually impossible to transfer a tangible portion of energy of the annular electron beam to the target in such RVD, because the beam is already on the pinch threshold at the very moment of its formation and is unstable (especially in combination with such plasma anode, which parameters change essentially both during each pulse and from one pulse to another).

Therefore, it is desirable that the anode should be made from solid substance and either itself functions as a target or incorporates a target, and that the pinch should be prevented in the gap between the electrodes and self-focussing of the electron beam be achieved on the anode surface simultaneously in the process of the discharge.

It is astonishing, that, according to the available data, main attention in development of such means was paid only to shaping the RVD cathode emitters while using essentially flat anodes. A striking example of such approach can be a RVD based pulse source of electrons that comprises a plasma cathode having a shaped plate of a dielectric material and a conductive cover of precisely the same shape for a portion of the surface of said plate (SU 1545826 A1). Under a pulse discharge, such a composite cathode can generate an electron beam, which is not subject to the pinch and has the shape that corresponds to the shape of the dielectric plate.

However, such as much as possible uniform compression of the target, which is necessary for the ICF and pycnonuclear processes, is unachievable by shaping the electron beam only. Therefore, the described RVD and its analogues can not be feasibly applied in the processes of impact compression of a substance up to a superdense state.

Problems in suppressing the pinch in the gap between the electrodes and in providing the self-focussing of electron beams on the target surface made many physicists so pessimistic that they came to a conclusion of principal inapplicability of RVD's as drivers for transmutation processes and ICF (see, *e.g.*, (1) James J. Duderstadt, Gregory Moses, *Inertial Confinement Fusion.* John Wiley and Sons, New York, 1982 . (2) E.P. Velikhov, S.V. Putvinsky. *Fusion Power. Its Status and Role in the Long-Term Prospects.* In 4.2.2. *Drivers for Inertial Controlled Fusion/http://relcom.website.ru/wfs-moscow. etc*).

Nevertheless, the research in this direction continued.

Thus, the nearest to the invention, as for the technical essence, method and means that are in principle applicable for impact compression of a substance were disclosed at International Conference dedicated to particle accelerators (S. Adamenko, E. Bulyak *et al. Effect of Auto-focusing of the Electron Beam in the Relativistic Vacuum Diode.* In: Proceedings of the 1999 Particle Accelerator Conference, New York, 1999) and in a later article (V.I. Vysotski, S.V. Adamenko *et al. Creating and Using of Superdense Micro-beams of Relativistic Electrons.* Nuclear Instruments and Methods in Physics Research A 455, 2000, pp.123-127).

Method of impact compression of a substance, which can be easily perceived by those skilled in the art from the above-mentioned sources of information, includes:

producing a target in the shape of such an axisymmetric part from a condensed substance that is at least a part of a RVD anode (namely, in the shape of a hemispheric tip of a needle-like anode-enhancer having a diameter of the order of several micrometers),

placing the target in the RVD fitted also with an axisymmetric plasma cathode, which is located practically on the same geometric axis with said anode-enhancer and is spaced by several millimeters therefrom, and

pulse discharge of the power source via the RVD in the self-focussing mode of an electron beam on the surface of the anode-enhancer.

Device using the described method for impact compression of a substance was made on the basis of a RVD. It comprises:

a strong gas-tight housing a part of which is made of a current-conducting material shaped in axial symmetry to confine a vacuum chamber, and

an axisymmetric plasma cathode and an axisymmetric anode-enhancer fixed in said chamber practically on the same geometric axis of which at least plasma cathode is connected to a pulsed high-voltage power source.

The cathode was made in accordance with a classical scheme: 'current-conducting (usually metallic) rod converging in the direction to the anode ended with dielectric element', the perimeter and the area of the operative end of the latter element being no greater than the respective perimeter and the cross section of said rod (Mesyats G.A. *Cathode Phenomena in a Vacuum Discharge: The Breakdown, the Spark and the Arc.* Nauka Publishers, Moscow, 2000, p.60 or Mesyats "G.A. Vacuum discharge Effects in the Diodes of High-Current Electron Accelerators", IEEE Trans. on Plasma Science, V.19, N. 5, Oct. 1991).

Shaping the both electrodes in the specific geometric forms allowed the pinch to be suppressed in the RVD gap, and to sharpen the electron beam to provide it's self-focussing on a small portion of the surface of the anode-enhancer.

However, such essentially point action on the anode-enhancer is suitable only for demonstration of the RVD applicability for impact compression of a substance, but it cannot provide the compression of a substantial portion of the target body to a superdense state at each pulse discharge.

*Brief Description of the Invention*

Therefore, the invention is based on the problem:

First, by way of changing the conditions of performing the steps, to create such a method for impact compression of an essential portion of the target substance to a superdense state that could be fulfilled at each pulsed RVD discharge,

Second, by way of changing the shapes and relative positions of electrodes in RVD, to create such a device for compressing a substance by impact, which would ensure effective application of the method, and

Third, by way of changing the shapes and dimension ratios of conductive and dielectric parts, to create such an axisymmetric plasma cathode which would provide the most economic effective application of the method.

The first aspect of the problem is solved so that in the method of compressing a substance by impact using a RVD having an axisymmetric vacuum chamber with current-conducting walls, an axisymmetric plasma cathode and an axisymmetric anode-enhancer, including:

producing a target in the shape of an axisymmetric part of a condensed substance that functions as at least a part of the anode-enhancer,

placing the anode-enhancer into the RVD chamber with a gap towards the plasma cathode practically on the same geometric axis therewith, and

pulse discharge of the power source via the RVD in the electron beam self-focussing mode on the surface of the anode-enhancer, according to the invention

the axisymmetric plasma cathode is used in the form of a current-conducting rod comprising a dielectric end element having the perimeter of the rear end embracing the perimeter of said rod at least in the plane perpendicular to the axis of symmetry of the cathode with a continuous gap, and the area of the emitting surface being greater than the maximum cross-section area of the anode-enhancer,

the anode-enhancer is placed with such a gap towards the plasma cathode that the center of curvature of the working surface of the anode-enhancer is located inside the focal space of the collectively self-focussing electron beam, and

the anode-enhancer is acted upon by an electron beam having the electron energy not less than 0.2 MeV, current density not less than $10^8$ A/cm$^2$ and duration not greater than 100 ns.

The results of application of this method happen to be quite unexpected even for the inventor who had been striving for them more than 10 years. Thus, using the simplest monometallic targets of highly pure copper, tantalum and other materials enabled to demonstrate experimentally the following:

after being compressed by impact, a tangible portion of each target mass flew apart and precipitated as aggregates of transmutation products on the walls of the RVD vacuum chamber and/or on a shield mentioned below;

some aggregates were rather homogeneous as for their elemental composition;

in the aggregates were certainly detected not only stable isotopes of known chemical elements which had not been present in the substance of the targets as admixtures but also relatively stable isotopes of unknown now and not yet identified transuranides;

isotopic composition of the products of transmutation of the target substance essentially differed from the reference data on the isotopic composition of the same elements in the Earth's crust,

the attempts to detect positive yield of thermal energy from the zone of transmutation failed up to now.

The above distinguishes the transmutation according to the invention in essence from the traditional transmutation attained by bombardment of solid targets (*e.g.*, made from the same copper or molybdenum) by ions (deuterons as a rule) produced from sources with magnetically confined anode plasma and run in complicated and dangerous in operation pulse accelerators to obtain power fluxes of the order of 1 kW at the ion energy of more than 5 MeV (see, *e.g.*, U.S. Pat. No. 5,848,110). In fact, only known in advance mainly radioactive isotopes of known in advance chemical elements, *e.g.*, $Zn^{65}$, $Mo^{99}$, $I^{123}$, $O^{15}$, *etc.* can be produced in such processes, whereas the method according to the invention is applicable at least for fusion of transuranides in quantities sufficient for chemical study.

Mentioned above and described in detail below results of carrying out the method according to the invention allow to suppose that the electron beam is collectively self-focussing on a essential portion of the surface of the anode-enhancer and excite in its near-surface layer a mechanical soliton-like density impulse converging to the symmetry axis of the target. This impulse transmits in the isoentropic manner the energy received from the electron beam to a portion of the target substance near its symmetry axis. The leading edge of said impulse tends to a spherical form. Therefore, as the soliton-like impulse reduces to a certain small volume with the center on the target symmetry axis, its leading edge becomes steeper, and the density of energy therein increases to a magnitude sufficient for the substance to reach a superdense state enough for pycnonuclear processes to proceed. That is the reason why the simplest (and, what is very important, practically safe in operation) RVD type electron accelerator with a minimum power consumption provides (as will be shown in detail below) the transmutation nuclear reactions with the yield of a wide spectrum of isotopes.

The first additional feature consists in that used in the relativistic vacuum diode plasma cathode has a pointed current-conducting rod, the dielectric end element of this cathode is provided with an opening for setting on said rod, and the setting part of said rod together with the pointed end is located inside the opening. This allows to control at least partially the gap between the RVD electrodes and to stabilize the plasma cathode operation, that is especially important for experimental optimization of the impact compression process.

The second additional feature consists in that the target is formed in the shape of an insert into the central part of the RVD anode-enhancer, the diameter of said insert is chosen in the range of 0.05 to 0.2 of the maximum cross-sectional dimension of the anode-enhancer. This allows to use any material as an object of compression to a superdense state irrespective of its electric conductivity and its usage both in a solid and a liquid state. Naturally, a liquid should be encapsulated either directly in the solid shell of the anode-enhancer or in an individual shell, which, after closure, must be inserted with the maximal acoustic transparency into the anode-enhancer.

The third additional feature consists in that at least that part of the anode-enhancer, which is directed to the plasma cathode, is spheroidally formed prior to mounting in the RVD. This allows the mechanical soliton-like impulse of density to be concentrated in a microscopically small volume and, as a result of this concentration, to provide the impact compression of an each target substance up to a superdense state with a yield of $10^{17}$ to $10^{18}$ atoms of transmuted products even with the minimum (the order of 300-1000 J) energy consumption for a single 'shot'.

The fourth additional feature consists in that the target is formed in the shape of a spheroidal body tightly fixed inside the anode-enhancer in such a way that the centers of the inner and outer spheroids practically coincide. This allows to increase essentially the yield of a transmuted material.

The fifth additional feature consists in that the anode-enhancer is acted upon by an electron beam having the electron energy up to 1.5 MeV, current density not greater than $10^8$ A/cm$^2$ and duration not greater than 50 ns. These parameters are sufficient for pycnonuclear processes to proceed in targets consisting of the most stable atoms of chemical elements from the 'middle part' of the periodic table.

The sixth additional feature consists in that the current density of the electron beam is not more than $10^7$ A/cm$^2$, which is sufficient for effective impact compression of the majority of condensed target materials.

The seventh additional feature consists in that the residual pressure in the RVD vacuum chamber is maintained at the level not greater than 0.1 Pa, which is quite sufficient to prevent a gas discharge between the RVD electrodes.

The second aspect of the problem is solved in that in a device for impact compression of a substance, which is based on RVD and is comprised of:

a strong gas-tight housing a part of which is made of a current-conducting material shaped in axial symmetry to confine a vacuum chamber, and

an axisymmetric plasma cathode and an axisymmetric anode-enhancer mounted with a gap in the vacuum chamber practically on the same geometric axis of which at least the cathode is connected to a pulse high-voltage power source, according to the invention

the plasma cathode is made in the form of a current-conducting rod comprising a dielectric end element having the perimeter of the rear end embracing the perimeter of said rod at least in the plane perpendicular to the axis of symmetry of the cathode with a continuous gap, and the area of the emitting surface being greater than the maximum cross-section area of the anode-enhancer,

at least one of the electrodes is provided with a means for adjusting the gap between the electrodes, and

the distance from the common geometric axis of said plasma cathode and anode-enhancer to the inner side of the current-conducting wall of the vacuum chamber is greater than $50 d_{max}$, where $d_{max}$ is a maximum cross-sectional dimension of the anode-enhancer.

The RVD having the combination of the mentioned features is useful at least for transmutation of nuclei of certain chemical elements into nuclei of other chemical elements as it was disclosed above in the commentaries to the subject matter of the method according to the invention.

The first additional feature consists in that the current-conducting rod of the plasma cathode is pointed and the dielectric end element is provided with an opening for setting on said rod the setting part of which is located together with the pointed end inside the said opening. Such design makes it possible to stabilize the plasma cathode operation and at least partially to adjust the gap between the electrodes in the RVD by shifting the dielectric end element with respect to the current-conducting rod.

The second additional feature consists in that the anode-enhancer has a circular shape in the cross section and is completely produced from a current-conducting in its main mass material to be transmuted. This allows to demonstrate the effect of transmutation on the simplest specimens of pure metals and metal alloys and to product transuranides in particular.

The third additional feature consists in that the anode-enhancer is made composite and comprises at least a one-layer solid shell and an inserted target tightly embraced by this shell, said target being in the shape of a body of revolution and made of an arbitrary condensed material with a diameter in the range of $(0.05\text{-}0.2) \cdot d_{max}$, where $d_{max}$ is a maximum cross-sectional dimension of the anode-enhancer. This allows to carry out the impact compression of a substance not only with the purpose of transmutation of atomic nuclei but also with the purpose of producing energy in the volume where pycnonuclear processes proceed with substantial (at least by an order) overshooting the Lawson criterion.

The fourth additional feature consists in that at least one shield preferably of current-conducting material is mounted in the tail part of the anode-enhancer. It can capture a portion of products of pycnonuclear processes produced as a result of the impact compression of the main target to a superdense state and function as an additional target for nuclear interaction at the scattering of transmuted particles of the anode-enhancer.

The fifth additional feature consists in that said shield is a thin-wall body of revolution with the diameter not less than $5d_{max}$ which is spaced from the nearest to the plasma cathode end of said anode-enhancer by the distance up to $20d_{max}$, where $d_{max}$ is a maximum cross-sectional dimension of the anode-enhancer. Such shield promotes self-focussing of the electron beam on the major portion of the anode-enhancer surface and captures a tangible portion of products of pycnonuclear processes.

The sixth additional feature consists in that said thin-wall body of revolution has a flat or concave surface at the side of the anode-enhancer. This significantly retards precipitation of the pycnonuclear processes products on the vacuum chamber walls.

The third auxiliary aspect of the problem is solved in that in the axisymmetric plasma cathode having a current-conductive rod for connection to a pulsed high-voltage power source and a dielectric end element according to the invention the perimeter of the rear end of the dielectric element embraces the perimeter of said rod with a continuous gap at least in the plane perpendicular to the axis of symmetry of the cathode.

In case of a breakdown along the surface, the dielectric end element of such cathode is practically instantly covers with plasma. The electron work function in such plasma is close to zero. Therefore, the current in the RVD electrode intermediate gap and, respectively, the total electron energy in the electron beam practically coincide with physically permissible maximum values of these parameters. That is why the plasma cathode of the invention is especially useful in RVD based devices for impact compression of a substance.

The first additional feature consists in that the current-conducting rod of the plasma cathode is pointed and the dielectric end element is provided with an opening for setting on said rod the setting part of which is located together with the pointed end inside the said opening. As mentioned above, this makes it possible to use the plasma cathode at least as one of means for adjusting the gap between the RVD electrodes.

The second additional feature consists in that the dielectric end element has a blind opening, which is more preferable in adjusting the gap between the RVD electrodes.

The third additional feature consists in that the dielectric end element has a through opening, that is more preferable for controlling the formation of a plasma cloud and, respectively, stabilizing of the RVD operation at the moment of breakdown.

The fourth additional feature consists in that the dielectric end element is made of a material selected from the group consisting of carbon-chain polymers with single carbon-to-carbon bonds, paper-base laminate or textolite type composite materials with organic binders, ebony wood, natural or synthetic mica, pure oxides of metals belonging to III-VII groups of the periodic table, inorganic glass, sitall, ceramic dielectrics and basalt-fiber felt.

This list of preferable materials allows selection of dielectrics taking into account various requirements. For example, said organic materials and basalt-fiber felt are useful in terms of convenience in producing dielectric end elements and handling them while adjusting the gap between the RVD electrodes, and the rest of the mentioned inorganic materials are useful in terms of wear resistance and minimum effect upon the residual pressure in the RVD vacuum chamber after each next 'shot'.

The fifth additional feature consists in that the dielectric end element has a developed surface to facilitate formation of a plasma cloud in case of a breakdown.

The sixth additional feature consists in that the minimum cross-sectional dimension of said dielectric element is $c_{de\,min} = (5\text{-}10) \cdot c_{cr\,max}$, and the length of said element is $l_{de} = (10\text{-}20) \cdot c_{cr\,max}$, where $c_{cr\,max}$ is a maximum cross-sectional dimension of the current-conducting rod. Such relative dimensions of parts of the plasma cathode completely exclude the pinch in the RVD electrode intermediate gap and ensure the electron beam self-focussing on a substantial part of the anode-enhancer.

It will be understood that:

> In selection of specific embodiments of the invention, arbitrary combinations of said additional features with the primary inventive concept are possible,
> This inventive concept can be supplemented and/or specified within the scope defined by the claims using general knowledge of those skilled in the art,
> The preferable embodiments of the invention disclosed below are in no way intended to limit the scope of the invention.

*Brief Description of the Drawings*

The essence of the invention will now be explained (in examples of nuclei transmutation in pycnonuclear processes) by detailed description of the device and method for compressing a substance by impact with reference to the accompanying drawings, in which:

FIG. 1 is a structural layout diagram of electrodes in the RVD, the adjustable geometric parameters being pointed out;

FIG. 2 is a block diagram of a pulsed high-voltage power source;

FIG. 3 is a preferable structure of an axisymmetric plasma cathode (a section along the symmetry axis);

FIG. 4 is a view of the rear end of the axisymmetric plasma cathode taken along the plane IV-IV (with a cross section of the current-conducting rod);

FIG. 5 is an integral axisymmetric anode-enhancer used directly as a target for demonstration of impact compression of a substance to a superdense state (a section along the symmetry axis);

FIG. 6 is a hollow-body axisymmetric anode-enhancer with an inserted spherical target designed, *e.g.*, for at least partial transmutation of long-lived radioactive isotopes of selected chemical elements into stable isotopes of as a rule other chemical elements (a section along the symmetry axis);

FIG. 7 is a graphic charts of voltage and current change in the RVD discharge pulse;

FIG. 8 is a diagram of absolute (by weight %) distribution of chemical elements according to the mass of atomic nuclei in products of transmutation of chemically pure copper;

FIG. 9 is a diagram of relative distribution of the same chemical elements according to the mass of atomic nuclei in products of transmutation of chemically pure copper;

FIG. 10 is a diagram of absolute (by weight %) distribution of chemical elements according to the mass of atomic nuclei in products of transmutation of chemically pure tantalum;

FIG. 11 is a diagram of relative distribution of the same chemical elements according to the mass of atomic nuclei in products of transmutation of chemically pure tantalum;

FIG. 12 is a diagram of absolute (by weight %) distribution of chemical elements according to the mass of atomic nuclei in products of transmutation of chemically pure lead;

FIG. 13 is a diagram of relative distribution of the same chemical elements according to the mass of atomic nuclei in products of transmutation of chemically pure lead;

FIG. 14 is a reference mass spectrum of isotopes of nickel obtained by a study of samples of natural nickel that coincides with the natural abundance of such isotopes in the Earth's crust;

FIG. 15 is a mass spectrum of relative distribution of isotopes of nickel in one of aggregates on a copper shield obtained in the result of pycnonuclear processes in an integral copper target (specimen No. 1);

FIG. 16 is the same mass spectrum as in FIG. 15 obtained in a study of another aggregate of atoms of nickel on the same shield;

FIG. 17 is a microphotography of a product of impact compression of a substance to a superdense state in the form of an iron hemisphere with a spherical cavity driven into a copper shield and partially etched by an ion beam.

*Best Mode for Carrying out the Invention*

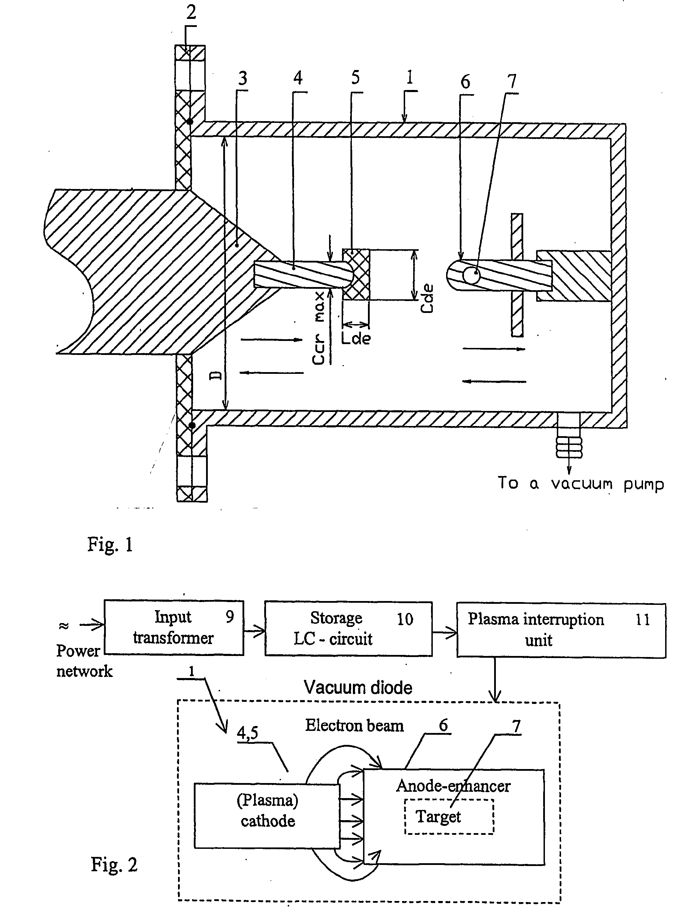

The device according to the invention (FIG. 1) is made on the basis of a RVD. The essential parts thereof are:

a strong gas-tight housing 1 which is made partly from a current-conducting material (for example, copper or stainless steel) shaped axisymmetrically to confine a vacuum chamber closed, in the operation condition, with a dielectric end cover 2 and connected when required via at least one pipe (not shown) to a vacuum pump;

a non-consumable axisymmetric current-conducting rod 3 preferably circular in the cross section and preferably tapered in the longitudinal section, rigidly and tightly fixed in the cover 2 and intended for connection of RVD to a pulsed high-voltage power source described below;

a replaceable (as worn out) axisymmetric plasma cathode comprising:

- a current-conducting rod 4 having its tail fixed in the rod 3 and
- a dielectric end element 5 rigidly connected with the rod 4, said element 5 having the area of the working end exceeding the cross-section area of the rod 4;

an axisymmetric anode-enhancer 6 which can be either integral or including a target 7, the maximum cross-section area of said anode-enhancer being smaller than the area of the emitting surface of the dielectric end element 5;

optionally, a shield 8 preferably of current-conducting material is mounted on the tail part of the anode-enhancer 6;

at least one (not shown specially but denoted with pairs of arrows under the contours of the plasma cathode 4, 5 and the anode-enhancer 6) mean for adjusting a gap between the electrodes, i. e. the space between the point of intersection of the end surface of the dielectric element 5 of the plasma cathode with its symmetry axis and similar point at the end of the anode-enhancer 6 both lying practically along the same geometric axis.

The RVD pulsed high-voltage power source (FIG. 2) in the simplest case can be a well known to those skilled in the art system that includes at least one capacitive or inductive energy storage with at least two plasma (or other) current interrupters. However, preferable are 'hybrid' sources of power (see, *e.g.*, 1. P.F. Ottinger, *J.Appl.Phys.*, **56,** No. 3, 1984; 2. G.I. Dolgachev et al. *Physics of Plasma,* **24,** No. 12, p.1078, 1984) which comprise connected in series (FIG. 2):

an input transformer 9 with means for connection to an industrial power network and a high-voltage output winding, a storage LC-circuit 10 comprising suitable (not shown) capacitors and inductors,
a unit 11 for plasma interruption of discharge current in the LC-circuit comprising a set of well known to workers in the art plasma guns symmetrically located in one plane, the number of which (up to 12, in particular) usually being equal to the number of capacitors in the LC-circuit.

Of course, besides of said power units, the RVD pulsed high-voltage power sources usually incorporate means (not shown) for measuring pulse current and voltage, such as at least one *Rogovski belt* and at least one capacitive voltage divider.

A source of such type was used for the RVD supply in experiments on compressing a substance by impact to a superdense state described below. This source could provide the following values of the controlled parameters:

| | |
|---|---|
| Mean energy of beam electrons | 0.2 to 1.6 MeV |
| Electron beam duration | not greater 100 ns |
| Electron beam power | $2*10^9$ to $0.75*10^{12}$ W |
| High-voltage discharge current | 10 kA to 500 kA. |

For effective carrying out of the method of impact compression of a substance, it is recommended to follow a number of additional conditions when producing individual parts of the RVD and targets.

Thus, it is important that the distance from the common geometric axis of the plasma cathode 4, 5 and anode-enhancer 6 to the inner side of the current-conducting wall of the housing 1 exceed $50d_{max}$, where $d_{max}$ is a maximum cross-sectional dimension of the anode-enhancer 6.

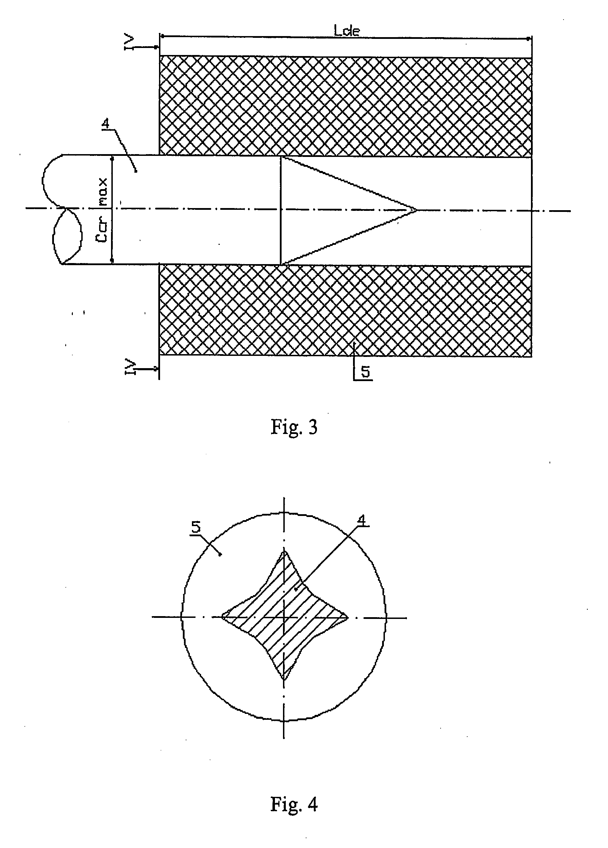

It is desirable that the plasma cathode (FIG. 3) has its current-conducting rod 4 pointed and dielectric end element 5 provided with a blind or through opening. This element 5 must be fitted on the rod 4 with a slight tightness so that the setting part of the rod 4 together with the pointed end be found inside said opening. The shape of such opening in its cross-section and the cross-section of the rod 4 (provided the conditions of axial symmetry be followed) may be not circular (*e.g.*, oval, elliptic, star-like, as shown in FIG. 4, *etc.*).

It is also desirable that the perimeter of the rear end of the dielectric element 5 (FIG. 4) at least in the plane perpendicular to the symmetry axis of the plasma cathode embrace the perimeter of the current-conducting rod 4 with a continuous gap. It is to be understood that this condition can be provided in various shapes of cross-sectional outline of the rod 4 and element 5.

It is highly preferable that the dielectric end element 5 of the plasma cathode have a developed outer surface, e.g., initially rough, as shown in FIG. 4, or deliberately corrugated at least in one arbitrary direction. Particularly, element 5 can be used having a shape of an axisymmetric multiple-pointed star in their cross-sections.

It is desirable that the minimum cross-sectional dimension $c_{de\,min}$ of said element 5 be in the range of (5-10) $\cdot c_{cr\,max}$, and the length $l_{de}$ be in the range of (10-20)$\cdot c_{cr\,max}$, where $c_{cr\,max}$ is a maximum cross-sectional dimension of the current-conducting rod 4.

Said element 5 of the plasma cathode can be made of any dielectric material, which (at the chosen shape and dimensions) is capable for a breakdown under the chosen working voltage in the gap between the RVD electrodes.

It is preferable that such material be selected from the group consisting of carbon-chain polymers with single carbon-to-carbon bonds (e.g., polyethylene, polypropylene *etc.*), paper-base laminate or textolite type composite materials with organic binders, ebony wood, natural or synthetic mica, pure oxides of metals belonging to III-VII groups of the periodic table, inorganic glass, sitall, basalt-fiber felt and ceramic dielectrics.

As it was mentioned above, the axisymmetric anode-enhancer 6 can be:

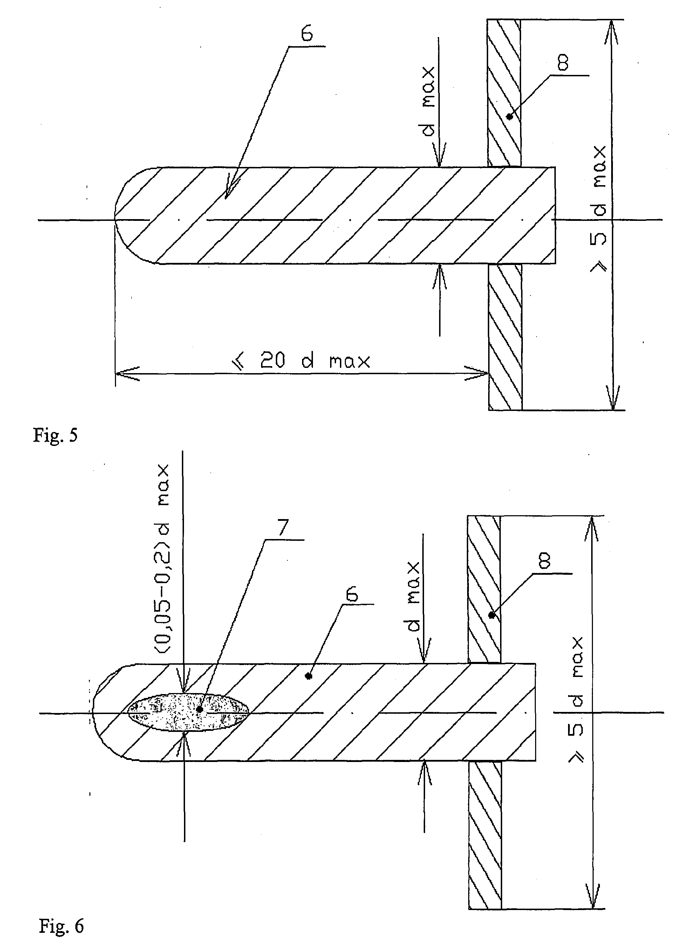

either integral (FIG. 5) and consisting of an arbitrary solid usually current-conducting in its mass preferably metallic material (including both pure metals and their alloys), *e.g.*, copper, tantalum, lead, *etc.*;
or have (FIG. 6) at least a one-layer preferably spherical shell 6 made of preferably current-conducting material and an axisymmetric inserted target 7 tightly fixed in said shell and made of an arbitrary condensed (solid or liquid) substance to be compressed by impact.

A maximum diameter of the axisymmetric inserted target 7 is preferably selected in the range of $(0.05\text{-}0.2).d_{max}$, where $d_{max}$ is a maximum cross-sectional dimension of the anode-enhancer 6 as a whole. Irrespective of the geometric shape of the target 7 body, it must be fixed inside the anode-enhancer 6 so that the center of its surface curvature practically coincide with the curvature center of the working surface of the anode enhancer 6. It is very important that dislocation density in the material of the anode-enhancer 6 and in the material of the target 7 be as small as possible and that an acoustic contact be provided between these parts.

Said shield 8, which can be mounted in the tail part of the anode-enhancer 6, is usually made from a current-conducting material as a preferably thin-wall body of revolution. The diameter of said shield 8 must be not smaller than $5d_{max}$ and it's distance from the working end of the anode-enhancer 6 must be not greater than $20d_{max}$, where $d_{max}$ is a maximum cross-sectional dimension of the anode-enhancer 6. It is desirable that said shield 8 have a flat or concave surface at the side of the working end of the anode-enhancer 6 (FIGS. 5 and 6).

The method for impact compression a substance using the described device usually includes:

a) connecting the current-conducting rod 4 of the aforesaid plasma cathode to the non-consumable current-conducting rod 3;
b) producing a set of replaceable axisymmetric anodes-enhancers 6 preferably having their working ends rounded in one of the following variants:

either in the form of integral pieces of the material to be compressed by impact (for transmutation or any other nuclear transformation),
or in the form of preferably one-layer shells wherein targets 7 are tightly inserted, said targets being made of the material (preliminarily encapsulated, as required) to be compressed by impact (for transmutation or any other nuclear transformation);

c) (optionally) fitting at least some of the anodes-enhancers 6 with current-conducting shields 8 made of copper, lead, niobium, tantalum etc.;
d) placing each next anode-enhancer 6 in the vacuum chamber of the RVD housing 1 practically on the same geometric axis with the plasma cathode 4, 5;
e) adjusting the gap between the working ends of the dielectric end element 5 of the plasma cathode and the anode-enhancer 6 in such a way that the center of curvature of the working surface of the anode-enhancer 6 is located inside the focal space of the collectively self-focussing electron beam at a pulse discharge of the power source via the RVD;
f) closing the vacuum chamber by fitting the end dielectric cover 2 on a flange of the strong gas-tight current-conducting housing 1 of the RVD;
g) vacuuming the chamber in the RVD housing 1, which is carried out:

at least twice prior to the first 'shot' upon the target (pumping out the air first and then at least once blowing down the chamber with clean dry nitrogen and re-vacuuming to the residual pressure of gases not greater than 0.1 Pa), and
at least once prior to each next 'shot', if the residual pressure exceeds said value;

h) connecting an external high-voltage power source of the RVD to a power network via the input transformer 9 and storing the electric energy required for an experiment in the LC-circuit 10;
i) discharging the LC-circuit 10 via the unit 11 for plasma interruption of the current pulse, the non-consumable axisymmetric current-conducting rod 3, the replaceable current-conducting rod 4 and the dielectric end element 5 on the RVD anode-enhancer 6 with generation of an electron beam having the electron energy not less than 0.2 MeV, current density not less than $10^8$ A/cm$^2$ (and preferably not more than $10^8$ A/cm$^2$, and more preferably not more than $10^7$ A/cm$^2$) and duration not greater than 100 ns (and preferably not more than 50 ns);
j) removing of the products obtained after the compression of a portion of the target substance to a superdense state from the vacuum chamber of the RVD housing 1 and studying these products by the commonly used techniques.

The experimental targets were intended to:

demonstrate the transmutation effect as a result of the impact compression of a substance to a superdense state (integral anodes-enhancers 6 in accordance with FIG. 5); and

evaluate the possibility of radioactive materials deactivation (hollow-body anode-enhancers 6 with inserted target 7 according to FIGS. 1 and 6). As mentioned above, such target 7 must be inserted into the anode-enhancer 6 providing the maximum acoustic transparency of their junction contact, and the curvature centers of the working surfaces of the both said components must coincide practically.

The integral anodes-enhancers 6 had average radius of curvature of the working ends in the range of 0.2 to 0.5 mm, as a rule. They were made, particularly, of chemically pure metals, such as copper, tantalum and lead. Such anodes-enhancers 6 can be stored outdoors. An oxide film that appears on the surface (especially of copper and lead) does not prevent and, according to some observations, even enhances their use in accordance with the above-mentioned purposes.

The inserted targets 7 had a shape of pellets made of available $Co^{60}$ isotope and artificial mixtures of $Co^{56}$ and $Co^{58}$ produced by irradiation of natural nickel on U-120 cyclotron in Nuclear Research Institute of National Academy of Sciences of Ukraine.

The use of such targets required additional shells (not shown) made of polycaprolactam (capron) that are mounted inside the RVD vacuum chambers. These shells enveloped both RVD electrodes and reduced significantly the risk of the radioactive cobalt precipitation on the walls of the housing 1 and the RVD cover 2.

The initial radioactivity values and those attained after transmutation of utilized cobalt isotopes were controlled by ordinary germanium-lithium gamma-ray detectors.

More than thousand of adjustment experiments had been carried out prior to beginning of the operational experiments on impact compression of a substance to a superdense state. The results of adjustment experiments helped to select and more exactly define (taken into account the dimensions of parts 4,5 of the plasma cathode and anode-enhancer 6, and specific parameters of the charge) the width of the gap between the RVD electrodes in order to provide hitting of the target curvature centers into the focal space of the RVD electron beam.

The operational experiments were carried out in series. Their number varied in different series and ranged from 50 (at transmutation of radioactive cobalt) to several hundreds. All the experiments had a through numbering.

The initial data on the used targets, discharge parameters and obtained results were recorded in logbooks under sequential numbers.

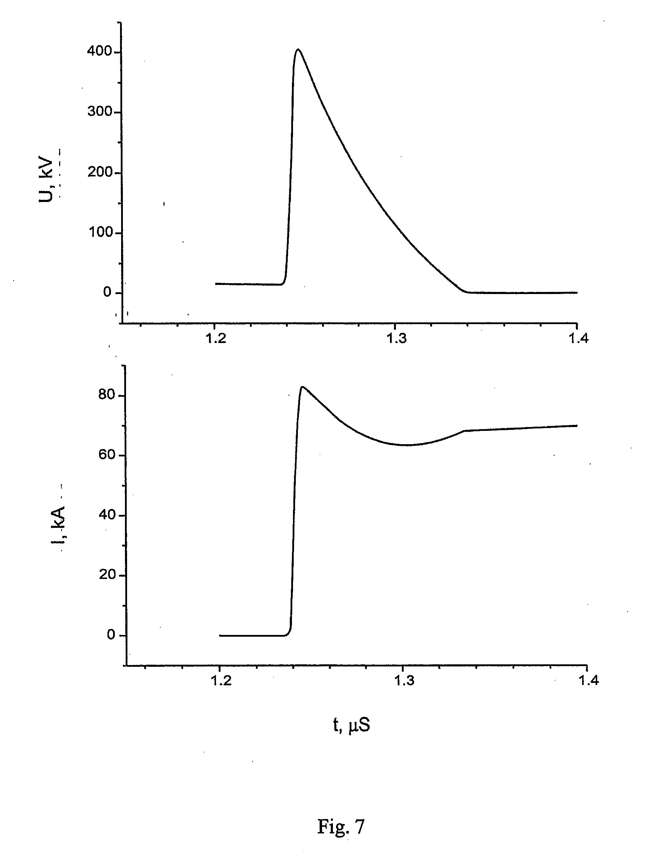

The shape of voltage and current pulses in the gap between the RVD electrodes and actual duration of the electron beam were checked with current and voltage oscillograms, typical examples are shown in FIG. 7. These and many other oscillograms demonstrate that the duration of the electron beam does not exceed 100 ns.

It is important to note that the electron beam current (despite a sharp voltage drop on the RVD plasma cathode) only slightly decreases as compared to the peak value. This proves the efficiency of usage of the plasma cathodes 4,5.

After statistical processing of the results of the adjustment experiments with regard to the controlled parameters of the electron beam generation process approximate dimensions for the electrodes gap and approximate values of the focal space volume were determined (see Table 1).

Table 1

| Dependence of the gap between the electrodes and the focal space volume on the rest of the parameters of the electron beam generation process | | | | | | |
|---|---|---|---|---|---|---|
| Mean energy of beam electrons, MeV | Dimensions of the dielectric element of the plasma cathode, mm | | Dimensions of the working end of the anode-enhancer | | Gap between the electrodes, mm | Focal space volume, $mm^3$ |
| | Diameter | Length | Curvature radius, mm | Area, $mm^2$ | | |
| 0.2 | 4.0-6.0 | 5.0 | 0.25 | 0.75 | 2.0-3.0 | 0.02 |
| 0.5 | 16.0-24.0 | 8.75 | 0.45 | 2.4 | 7.0-10.5 | 0.12 |
| 1.0 | 45.0-67.0 | 9.5 | 0.73 | 6.7 | 36.5-55.0 | about 0.5 |
| 1.5 | 80.0-120.0 | 15.25 | about 1.0 | about 12.3 | $\geq 59$ | about 1.3 |

Following these limits of the gap between the RVD electrodes in the operational experiments ensured:

First, hit of the curvature centers of the working surfaces of the integral anodes-enhancers 6 (and in case of using targets 7, hit of the curvature centers of their surfaces too) into the focal space of the collectively self-focussing electron beam and

Second, reveal of the effect of transmutation after each pulsed discharge of the RVD power source.

Moreover, following the parameters listed in Table 1, the current density on the surface of the working end of the anode-enhancer 6 was possible to establish within the range of $10^6$ A/cm$^2$ to $10^8$ A/cm$^2$. For the most part of impact compression experiments, this parameter was maintained within the range of $10^6$ A/cm$^2$ to $10^7$ A/cm$^2$.

The results of all the operational experiments looked rather uniform, namely:

Products of transmutation in the form of a wide spectrum of practically stable isotopes of various (both light and heavy, and even super-heavy transuranides) chemical elements appeared from a portion (at the average about 30% by weight) of the initial material;

These products and chemically unchanged residues of integral anodes-enhancers 6 (and inserted targets 7) flew apart from the volume of impact compression primarily in the direction opposite to the plasma cathode and precipitated as drop-shaped aggregates of various forms and dimensions on the walls of the vacuum chamber of the RVD and/or on the shields 8, if applicable.

Said products were collected for study.

Electron microprobe-analyzers REMMA-102, Tesla and Cameca were used for detecting of separated aggregates of transmutation products and determination of their position on the surface (on shields 8 in particular) with the purpose of subsequent study of the elemental and isotopic composition (and in certain cases, for registration of the shape of such aggregates). *Jamp10S* model of an Auger spectrometer by JEOL, time-of-flight pulsed laser mass-spectrometer designed by Kiev's National T.G. Shevchenko University (Ukraine), ionic microprobe-analyzer CAMECA's IMS-4f and FINNIGAN's highly sensitive mass-spectrometer VG9000 were used for the study of the elemental and isotopic composition of said products.

As a result in all the operational experiments on impact compression of integral anodes-enhancers 6 to a superdense state, an essential discrepancy was observed between their initial composition (practically one chemical element for all targets in each series) and elemental and isotopic composition of the transmutation products.

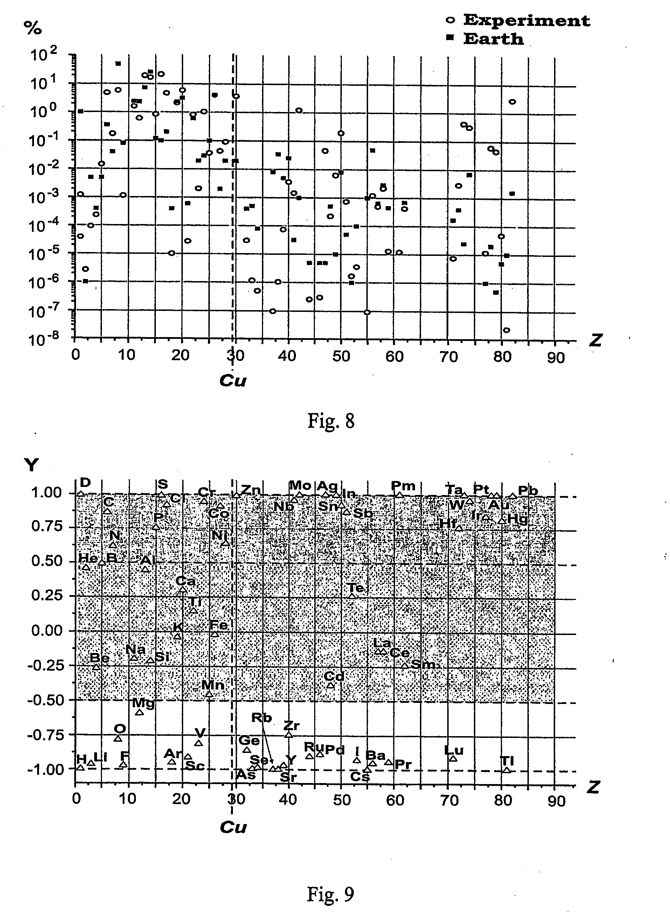

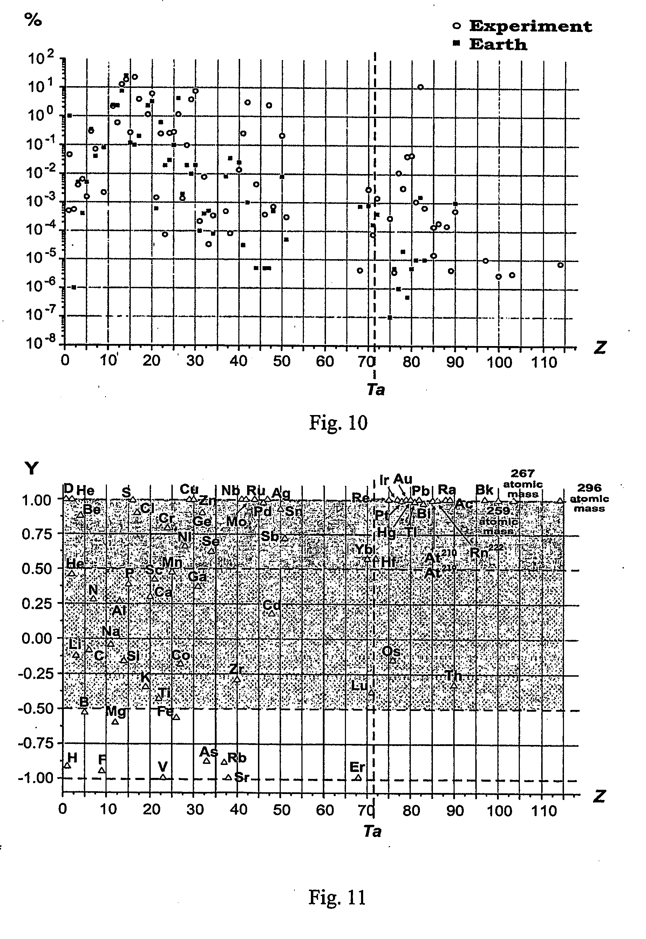

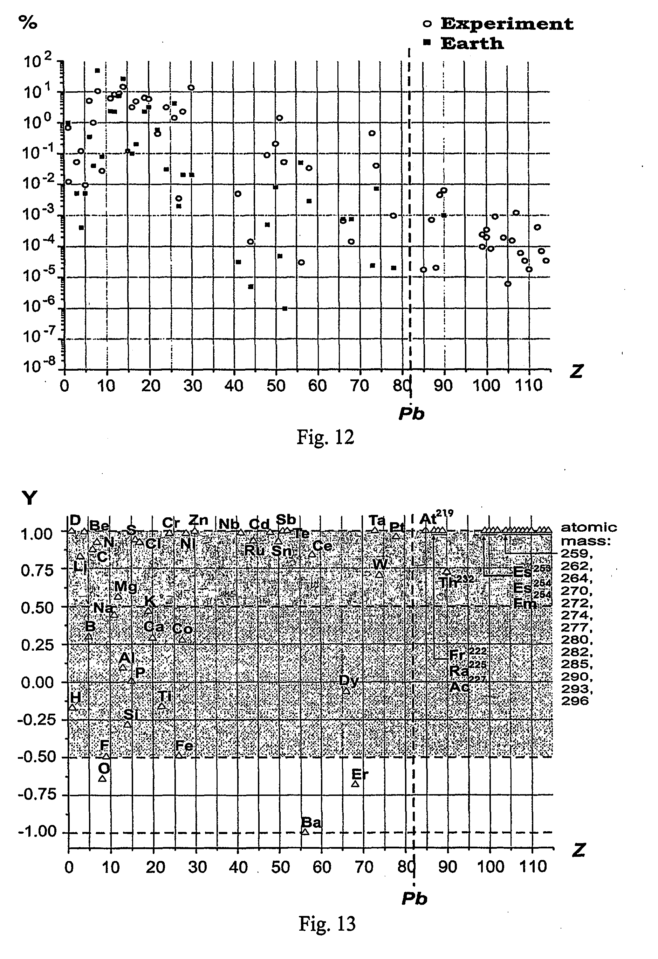

In order to make certain of that, let's observe FIGS. 8 to 13 wherein vertical dash lines indicate the charge of an initial chemical element's nucleus.

It should be noted, that the isotopes of chemical elements which were not present in the initial material of the target but appeared in the products of transmutation are indicated in FIGS. 8, 10 and 12:

by light circles according to their concentration in said products of pycnonuclear processes,
by black squares according to their concentration in the Earth's crust.

Nuclei charges and percentage by weight of these isotopes are easy to determine using the numerical data on the **X** and **Y** axis respectively.

With light triangles and adjacent chemical symbols, FIGS. 9, 11 and 13 show relative deviations **Y** of concentrations (% by weight) of certain chemical elements from natural abundance ratio that were calculated by formula:

$$\frac{A-B}{A+B} = Y,$$

where:

**A** is a ratio of a certain isotope of a certain chemical element in the products of transmutation, and
**B** is a ratio of the same isotope of the same chemical element in the Earth's crust.

As it's clearly seen from FIGS. 8, 10 and 12, in the process of transmutation of initial copper, tantalum and lead appears a wide spectrum of isotopes of various chemical elements with smaller and greater **Z** nuclear charges in comparison to the nuclear charge of parent element.

However, the greater is the nuclear charge of the target material the higher is the probability of production of stable transuranides (including those not identified yet) with atomic mass of greater than 250 atomic *mass* units (and in some to be checked cases, up to 600 *amu* and greater).

The presence of atoms having such masses was detected at first by the method of ion mass spectrometry and then was proved by well known methods of Rutherford alpha and proton back-scattering.

Moreover, FIGS. 9, 11 and 13 clearly show that concentrations of substantial portion of chemical elements in transmutation products statistically reliably exceed (more than in three times and some elements in 5-10 and more times) their normal concentrations in the Earth's crust (see areas marked out with dark colour within the range of **Y** values from 0.5 to 1.0). This obviously proves the artificial origin of such products of pycnonuclear processes.

As for changes in elemental and isotopic composition, similar results were obtained also in experiments with targets of radioactive cobalt. However, in these cases the main attention was paid to reduction in radioactivity in products of the target spread due to transmutation of radioactive nuclei of cobalt into non-radioactive isotopes of other chemical elements, in those part of the target which was in the focal space.

This reduction essentially varied in separate samples, that can be explained by difference in density of acoustic contact between the inner walls of cavities in anodes-enhancers and the material of inserted targets 7 (see data from a log-book in Table 2).

Table 2

| Radioactivity reduction in the products of cobalt targets spread | | | | | |
|---|---|---|---|---|---|
| Sample number | Reduction in gamma-activity, % | Sample number | Reduction in gamma-activity, % | Sample number | Reduction in gamma-activity, % |
| 2397 | 47.6 | 2479 | 2.2 | 2588 | 46.5 |
| 2398 | 10.7 | 2481 | 22.8 | 2600 | 33.3 |
| 2425 | 21.6 | 2534 | 29.5 | 2769 | 28.9 |
| 2426 | 17.0 | 2558 | 22.9 | 2770 | 36.4 |

Thus, sample No. 2479 was deactivated only by 2.2 % whereas sample No. 2397 and No. 2588 lost more than 45 % of their activity in the result of transmutation.

Further, as it was definitely established, the distribution of isotopes in conglomerates of atoms of each chemical element detected in products of pycnonuclear processes is essentially differed from the distribution of the same isotopes in the Earth's crust.

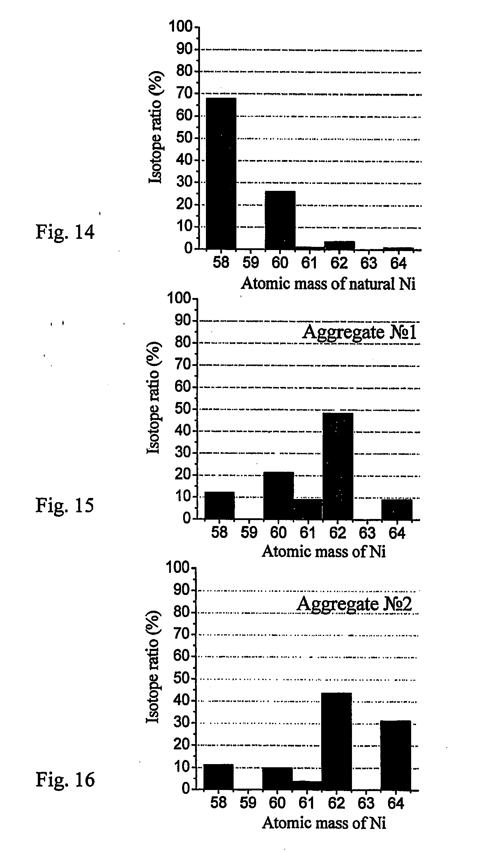

The brightest example of such drastic discrepancy is the difference between the normal distribution of isotopes of nickel in natural samples (FIG. 14) and in two aggregates of nickel atoms produced by transmutation of copper targets (FIGS. 15 and 16). Thus, the content of $Ni^{58}$ isotope is up to 70 % in the mass of natural nickel, while the proportion of $Ni^{58}$ in products of copper transmutation (with $Cu^{63}$ isotope dominating in the target) exceeds 10 %. Similarly, content of $Ni^{60}$ isotope essentially (usually twice) decreased whereas content of $Ni^{62}$ sharply increased.

And at last, a bright evidence of impact compression of a substance to a superdense state by the method according to the invention is an ejection from the RVD focal space rather big bodies whose shape visually proves the existence of necessary conditions for a short-term appearance of at least electron-nuclear and, even, electron-nucleonic plasma in said space.

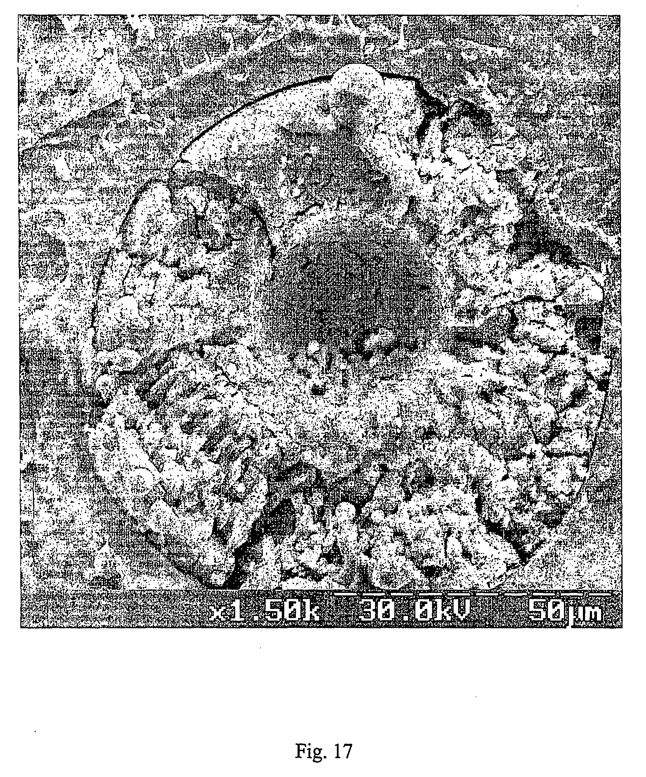

Thus, on FIG. 17, presented essentially iron hemisphere comprising 93 % by weight Fe with admixtures of silicon and copper isotopes on the background of the copper shield.

Obviously, this hemisphere is a fraction of a spherical body formed from a substantial part of the copper anode-enhancer 6 (sample No. 4908 according to the log-book of the applicant). It has an outer diameter about 95 $\mu$m and a practically concentric spherical cavity with a diameter of about 35 $\mu$m. The roughness on the major portion of the ring end of the hemisphere can be explained by the crack of the initial sphere.

It is easy to assume that in the experiment with the sample No. 4908, the center of the focal space of the electron beam practically coincided with the center of the target curvature. In this case, soliton-like density impulse focussed itself in the volume that is represented as a spherical cavity in the disclosed product.

*Industrial Applicability*

The device for compressing a substance by impact may be produced using commercially available components, and the method according to invention may be a basis for development and implementation of highly efficient and environmentally safe technologies for:

First, synthesis of stable transuranides, which is greatly important for broadening the knowledge about the nature;

Secondly, transmutation of nuclei of known chemical elements for experimental production of their stable isotopes and for neutralization of radioactive materials (including atomic-industry waste) containing long-lived radioactive isotopes; and
Third, ICF using chemical elements widely spread in nature and their compositions as fuel.

**Claims**

1. A method of compressing a substance by impact using a relativistic vacuum diode having an axisymmetric vacuum chamber (1) with current-conducting walls, an axisymmetric plasma cathode (4,5) and an axisymmetric anode-enhancer (6), including:

   producing a target (7) in the shape of an axisymmetric part made of a condensed substance that functions as at least a part of the anode-enhancer,
   placing the anode-enhancer (6) into the relativistic vacuum diode chamber (1) with a gap towards the plasma cathode (4,5) practically on the same geometric axis therewith, and
   pulse discharge of a power source via the relativistic vacuum diode in the electron beam self-focussing mode on the surface of the anode-enhancer (6),

   **characterized in that**
   the axisymmetric plasma cathode (4,5) is used in the form of a current-conducting rod (4) comprising a dielectric end element (5) having the perimeter of the rear end embracing the perimeter of said rod (4) at least in the plane perpendicular to the axis of symmetry of the cathode as the whole with a continuous gap, and the area of the emitting surface being greater than the maximum cross-section area of the anode-enhancer (6),
   the anode-enhancer (6) is placed with such a gap towards the plasma cathode (4,5) that the center of curvature of the working surface of the anode enhancer (6) is located inside the focal space of the collectively self-focussing electron beam, and
   the anode-enhancer (6) is acted upon by an electron beam having the electron energy not smaller than 0.2 MeV, current density not smaller than $10^6$ A/cm$^2$ and duration not greater than 100 ns.

2. The method of claim 1 **characterized in that** used in the relativistic vacuum diode plasma cathode has a pointed current-conducting rod, the dielectric end element of this cathode is provided with an opening for setting on said rod, and the setting part of said rod together with the pointed end is located inside the opening.

3. The method of claim 1 **characterized in that** the target is formed in the shape of an insert into the central part of the RVD anode-enhancer, the diameter of said insert is chosen in the range of 0.05 to 0.2 of the maximum cross-sectional dimension ($d_{max}$) of the anode-enhancer.

4. The method of claim 1 **characterized in that** at least that part of the anode-enhancer, which is directed to the plasma cathode, is spheroidally formed prior to mounting in the relativistic vacuum diode.

5. The method of claim 3 **characterized in that** the target is formed in the shape of a spheroidal body tightly fixed inside the anode-enhancer in such a way that the centers of the inner and outer spheroids practically coincide.

6. The method of claim 1 **characterized in that** the anode-enhancer is acted upon by an electron beam having the electron energy up to 1.5 MeV, current density not greater than $10^8$ A/cm$^2$ and duration not greater than 50 ns.

7. The method of claim 6 **characterized in that** the current density of the electron beam is not greater than $10^7$ A/cm$^2$.

8. The method of claim 1 **characterized in that** the residual pressure in the vacuum chamber of the relativistic vacuum diode is maintained at the level not greater than 0.1 Pa.

9. A device for impact compression of a substance, which is based on relativistic vacuum diode and is comprised of:

   a strong gas-tight housing a part of which is made of a current-conducting material shaped in axial symmetry to confine a vacuum chamber (1), and
   an axisymmetric plasma cathode (4,5) and an axisymmetric anode-enhancer (6) mounted with a gap in the vacuum chamber (1) practically on the same geometric axis of which at least the cathode (4,5) is connected to a pulse high-voltage power source

**characterized in that**
the plasma cathode (4,5) is made in the form of a current-conducting rod (4) comprising a dielectric end element (5) having the perimeter of the rear end embracing the perimeter of said rod (4) at least in the plane perpendicular to the axis of symmetry of the cathode with a continuous gap, and the area of the emitting surface being greater than the maximum cross-section area of the anode-enhancer (6),

at least one of the relativistic vacuum diode electrodes is provided with means for adjusting the gap between the electrodes, and

the distance from the common geometric axis of said plasma cathode (4,5) and anode-enhancer (6), to the inner side of the current-conducting wall of the vacuum chamber (1) is greater than $50d_{max}$, where $d_{max}$ is a maximum cross-sectional dimension of the anode-enhancer (6).

10. The device of claim 9 **characterized in that** the current-conducting rod of the plasma cathode is pointed and the dielectric end element is provided with an opening for setting on said rod the setting part of which is located inside said opening together with the pointed end.

11. The device of claim 9 **characterized in that** the anode-enhancer has a circular shape in the cross section and is completely produced of a material to be transmuted that is current-conducting in its main mass.

12. The device of claim 9 **characterized in that** the anode-enhancer is made composite and comprises at least a one-layer solid shell and an inserted target tightly embraced by this shell, said target being in the shape of a body of revolution and made of an arbitrary condensed material with a diameter within the range of $(0.05\text{-}0.2) \cdot d_{max}$, where $d_{max}$ is a maximum cross-sectional dimension of the anode-enhancer.

13. The device of claim 9 **characterized in that** at least one shield preferably of current-conducting material is mounted in the tail part of the anode-enhancer.

14. The device of claim 13 **characterized in that** said shield is a thin-wall body of revolution with the diameter not less than $5d_{max}$ which is spaced from the nearest to the plasma cathode end of said anode-enhancer by the distance up to $20d_{max}$, where $d_{max}$ is a maximum cross-sectional dimension of the anode-enhancer.

15. The device of claim 14 **characterized in that** said thin-wall body of revolution has a flat or concave surface at the side of the anode-enhancer.

16. An axisymmetric plasma cathode (4,5) for the relativistic vacuum diode having a current-conductive rod (4) for connection to a pulsed high-voltage power source and a dielectric end element (5) **characterized in that** the perimeter of the rear end of the dielectric element (5) embraces the perimeter of said rod (4) with a continuous gap at least in the plane perpendicular to the axis of symmetry of the cathode.

17. The cathode of claim 16 **characterized in that** the current-conducting rod thereof is pointed and the dielectric end element is provided with an opening for setting on said rod the setting part of which is located together with the pointed end inside the said opening.

18. The cathode of claim 17 **characterized in that** the dielectric end element has a blind opening.

19. The cathode of claim 17 **characterized in that** the dielectric end element has a through opening.

20. The cathode of claim 16 **characterized in that** the dielectric end element is made of a material selected from the group consisting of carbon-chain polymers with single carbon-to-carbon bonds, paper-base laminate or textolite type composite materials with organic binders, ebony wood, natural or synthetic mica, pure oxides of metals belonging to III-VII groups of the periodic table, inorganic glass, sitall, basalt-fibre felt and ceramic dielectrics.

21. The cathode of claim 16, 17 or 18 **characterized in that** the dielectric end element has a developed surface.

22. The cathode of claim 16 or 17 **characterized in that** the minimum cross-sectional dimension of said dielectric element is $c_{de\,min} = (5\text{-}10) \cdot c_{cr\,max}$, and the length of said element is $l_{de} = (10\text{-}20) \cdot c_{cr\,max}$, where $c_{cr\,max}$ is a maximum cross-sectional dimension of the current-conducting rod.

**Patentansprüche**

1. Das Verfahren zur Stoßkompression der Substanz bei Verwendung der relativistischen Vakuumdiode (RVD), welche eine mit elektroleitenden Wänden versehene axialsymmetrische Vakuumkammer, eine Plasmakathode und einen Anodekonzentrator hat, inkludiert:

   Herstellung des Zielkörpers aus kondensierter Substanz als axialsymmetrisches Detail, das zumindest als Körperteil des Anodekonzentrators dient;
   Einsteckung des Anodekonzentrators in die RVD mit einem Entladungspalt zu Plasmakathode praktisch an der gleichen geometrischen Achse und
   Anstoßentladung der Stromquelle durch die RVD im Selbstfokussierungsmodus des elektronischen Bündels auf der Anodekonzentratorsoberfläche,

   **dadurch gekennzeichnet, daß**
   die axialsymmetrische Plasmakathode, welche als elektroleitender Stab (4) mit einem dielektrischen Stirnelement (5) hergestellt ist, verwendet wird, wobei die Stirnfläche des Stirnelements (5) ist größer als maximale Querschnitt stromleitendes Stabs (4) und des Anodekonzentrators (6),
   der Anodekonzentrator (6) mit solchem Entladungsspalt zur Plasmakathode (4,5) eingestellt wird, bei welchem das Krümmungszentrum der Arbeitsoberflächen des Anodekonzentrators (6) innerhalb des fokalen Bereichs des kollektiv selbstfokussierenden elektronischen Bündels liegt, und
   das elektronische Bündel auf Anodekonzentrator (6) mit Energie zumindest 0,2 meV bei Stromdichte zumindest $10^6$ A/cm$^2$ und Dauer nicht mehr als 100 ns wirkt.

2. Das Verfahren nach Anspruch 1, **dadurch gekennzeichnet, daß** solche axialsymmetrische Plasmakathode (4,5) in der RVD verwendet wird, bei welcher stromleitender Stab (4) zugespitzt ist und das dielektrische Stirnelement (5) eine Öffnung für Aufsetzung auf den o.g. Stab (4) hat, dabei gespitzte aufzusetzender Teil des Stabs (4) innerhalb der genannten Öffnung befindet sich.

3. Das Verfahren nach Anspruch 1, **dadurch gekennzeichnet, daß** der Zielkörper (7) als Einsatz in zentralen Teil des RVD-Anodekonzentrators (6) geformt und der Zielkörpersdurchmesser von 0,05 bis 0,2 der maximalen Querschnitt $d_{max}$ des Anodekonzentrators (6) gewählt ist.

4. Das Verfahren nach Anspruch 1, **dadurch gekennzeichnet, daß** vor der Einsteckung in RVD dem gegenüber Plasmakathode (4,5) stehenden Teil des Anodekonzentrators (6) sphäroidische Form verliehen wird.

5. Das Verfahren nach Anspruch 3, **dadurch gekennzeichnet, daß** das Zielkörper (7) als sphäroidischer Körper geformt wird, der innerhalb des Anodekonzentrators (6) so festgesetzt wird, daß die Zentren des internen und externen Sphäroides praktisch aufeinander liegen.

6. Das Verfahren nach Anspruch 1, **dadurch gekennzeichnet, daß** der Anodekonzentrator (6) unter Wirkung des elektronischen Bündels mit Energie bis 1,5 meV, Stromdichte nicht mehr als $10^8$ A/cm$^2$ und Dauer nicht mehr als 50 s steht.

7. Das Verfahren nach Anspruch 6, **dadurch gekennzeichnet, daß** die Stromdichte im elektronischen Bündel nicht mehr als $10^7$ A/cm$^2$ beträgt.

8. Das Verfahren nach Anspruch 1, **dadurch gekennzeichnet, daß** der Restdruck in RVD- Vakuumkammer auf der Ebene max. 0,1 Pa gehalten wird.

9. Die Vorrichtung zur Stoßkompression der Substanz, welche auf dem RVD-Basis hergestellt ist und hat:

   ein festes gasdichtes Gehäuse (1), dessen Teil aus elektroleitendem Material in axialsymmetrischer Ausführung hergestellt ist und die Vakuumkammer einschränkt, und
   die in der Vakuumkammer mit Spalt praktisch an gleicher geometrischen Achse axialsymmetrisch installierten Plasmakathode und Anodekonzentrator, von denen zumindest die Plasmakathode zur Hochvoltimpulsstromquelle angeschlossen ist,

   **dadurch gekennzeichnet, daß**

die Plasmakathode als stromleitenden Stab (4) und damit fest verbundenen solchen dielektrischen Stirnelement (5) ausgeführt ist, dessen Stirnfläche die Querschnitt des stromleitenden Stabs (4) und die maxilmale Querschnitt des Anodekonzentrators (6) übeschreitet,

zumindest eine der RVD-Elektroden eine Vorrichtung für Zwischenelektroden-spalteinstellung hat, und

der Abstand von der geometrischen Gesamtachse der o.g. Plasmakathode (4,5) und des Anodekonzentrators (6) zur Innenseite der elektroleitenden Vakuumkammerwand mehr als $50 d_{max}$ ist, wo $d_{max}$ maximale Querschnitt des Anodekonzentrators (6) ist.

10. Die Vorrichtung nach Anspruch 9, **dadurch gekennzeichnet, daß** der stromleitende Stab (4) zugespitzt ist und das dielektrische Stirnelement (5) eine Öffnung für Aufsetzung auf o.g. Stab (4) hat, dessen Aufsetzteil samt Spitze sich innerhalb der genannten Öffnung befindet.

11. Die Vorrichtung nach Anspruch 9, **dadurch gekennzeichnet, daß** Anodekonzentrator (6) rundförmig im Querschnitt ist und gänzlich aus dem hauptsächlich stromleitenden und zu transmutierenden Material hergestellt ist.

12. Die Vorrichtung nach Anspruch 9, **dadurch gekennzeichnet, daß** der Anodekonzentrator (6) als zusammensetzbarer Teil ausgeführt ist und zumindest einen einschichtigen harten Mantel sowie ein mit diesem Mantel fest gefasstes einsetzbares Zieldrehkörper hat, das aus einem beliebigen kondensierten Material hergestellt ist und Durchmesser $(0,05 - 0,2)$ $50 d_{max}$ hat, wo $d_{max}$ maximale Querschnitt des Anodekonzentrators (6) ist.

13. Die Vorrichtung nach Anspruch 9, **dadurch gekennzeichnet, daß** im Endteil des Anodekonzentrators (6) zumindest ein Bildschirm (8) aus einem vorzugsweise stromleitenden Material installiert ist.

14. Die Vorrichtung nach Anspruch 13, **dadurch gekennzeichnet, daß** o.g. Bildschirm (8) in Form ein dünnwandiger Drehkörper ausgeführt ist, dabei ein Durchmesser dieser Drehkörper mindestens $5 d_{max}$ beträgt und diese Drehkörper von der zur Plasmakathode (4,5) nächstliegenden Stirnfläche des Anodekonzentrators (6) bis zu $20 d_{max}$ entfernt ist, wo $d_{max}$ maximale Querschnitt des Anodekonzentrators (6) ist.

15. Die Vorrichtung nach Anspruch 14, **dadurch gekennzeichnet, daß** der o.g. dünnwandige Drehkörper (8) von der Seite des Anodekonzentrators (6) eine glatte oder eingebogene Oberfläche hat.

16. Die axialsymmetrische Plasmakathode für die RVD, die stromleitenden Element für Anschluss zur Hochvoltimpulsstromquelle und dielektrischen Stirnelement (5) hat, **dadurch gekennzeichnet, daß** das stromleitende Element als Stab (4) ausgeführt ist, und das dielektrische Stirnelement (5) mit diesem Stab fest verbunden ist und als Elektronenemitter auf seiner ganzen Fläche dient.

17. Die Kathode nach Anspruch 16, **dadurch gekennzeichnet, daß** ihr stromleitender Stab (4) zugespitzt ist und das dielektrische Stirnelement (5) eine Öffnung für Aufsetzung auf den o.g. Stab (4) hat, dessen aufzusetzende Teil samt Spitze sich innerhalb der genannten Öffnung befindet.

18. Die Kathode nach Anspruch 17, **dadurch gekennzeichnet, daß** das dielektrische Stirnelement (5) eine Grundöffnung hat.

19. Die Kathode nach Anspruch 17, **dadurch gekennzeichnet, daß** das dielektrische Stirnelement (5) eine Durchöffnung hat.

20. Die Kathode nach Anspruch 16, **dadurch gekennzeichnet, daß** das dielektrische Stirnelement (5) aus solches Material hergestellt ist, der aus der Gruppe wählt ist, die von Kohlenstoffketten-Polymere mit der einfachen Kohlenstoff-Kohlenstoff-Bindungen, Kompositionsmaterialien mit organischen Binders wie Getinax oder Textolit, Ebenholz, natürliches oder synthetisches Glimmer, Reinmetaloxyden der Gruppen III-IV des Mendelejews Periodensystems, anorganisches Glas, Pyrokeramik, Basaltfaserfilz sowie keramische Dielektriken zusammengestellt ist.

21. Die Kathode nach Anspruch 16 bzw. Anspruch 17 bzw. Anspruch 18, **dadurch gekennzeichnet, daß** das dielektrische Stirnelement (5) eine erweiterte Oberfläche hat.

22. Die Kathode nach Anspruch 16 bzw. Anspruch 17, **dadurch gekennzeichnet, daß** die minimale Querschnitt des o.g. dielektrischen Stirnelements (5) $c_{dse\,min} = (5 - 10) \times_{ss\,max}$ und die Länge dieses Stirnelements (5) $l_{dse} = (10-20) \times_{ss\,max}$, wo $_{ss\,max}$ maximale Querschnitt des stromleitenden Stabs (4) ist.

**Revendications**

1. Procédé de compression par choc de la matière au moyen de la diode sous vide relativiste (DVR) qui a une chambre sous vide avec les parois, électriquement conductibles, une cathode à plasma, symétrique à l'axe, et une anode de concentration, symétrique à l'axe, comprenant:

   la fabrication d'une cible sous forme d'une pièce, symétrique à l'axe, en matière condensée qui sert, au moins, d'une partie de l'anode de concentration,
   l'installation de l'anode de concentration au sein de la DVR, avec un jeu, par rapport à la cathode à plasma, pratiquement, sur le même axe géométrique avec elle, et
   la décharge à impulsions de la source d'alimentation sur la DVR en mode d'autofocalisation du faisceau électronique sur la surface de l'anode de concentration,

   **caractérisé en ce que**
   on utilise la cathode à plasma, symétrique à l'axe, sous forme de la tige (4), électriquement conductible, avec l'élément (5) diélectrique de bout dont le pourtour du bout arrière, au moins, dans le plan, perpendiculaire à l'axe de symétrie de la cathode, d'une manière générale, embrasse le pourtour de ladite tige (4) avec le jeu en continu, et la superficie de la surface émettrice dépasse la superficie maximum de la section transversale de l'anode (6) de concentration, on installe l'anode (6) de concentration avec un jeu, par rapport à la cathode (4,5) à plasma avec lequel le centre de courbure de la surface de travail de l'anode (6) de concentration se situe à l'intérieur de l'espace focal du faisceau électronique collectivement autofocalisant,
   et on agit sur l'anode (6) de concentration par le faisceau électronique avec l'énergie des électrons de 0,2 eV au minimum; à la densité du courant de $10^6$ / $m^2$ au minimum et à la durée de 100 ns au maximum.

2. Procédé selon la revendication 1, **caractérisé en ce que** dans la DVR on utilise en tant que les parties constitutives la cathode (4,5) à plasma, symétrique à l'axe, dont la tige (4), électriquement conductible, est effilée, et l'élément (5) diélectrique de bout présente un trou pour recevoir ladite tige (4) dont la partie de mise en place, ensemble avec la pointe, se trouve à l'intérieur dudit trou.

3. Procédé selon la revendication 1, **caractérisé en ce que** la cible (7) est créée sous forme de la pièce d'insertion dans la partie centrale de l'anode (6) de concentration de la DVR dont le diamètre est choisi dans les limites de 0,05 à 0,2 de la dimension transversale maximum de la dimension $d_{max}$ de l'anode (6) de concentration.

4. Procédé selon la revendication 1, **caractérisé par le fait qu'**avant l'installation dans la DVR, on confère la forme sphéroïdale, au moins, à la partie de l'anode (6) de concentration qui est exposée à la cathode (4,5) à plasma.

5. Procédé selon la revendication 3, **caractérisé en ce que** la cible (7) est créée sous forme d'un corps sphéroïdal qu'on fixe, de façon étanche, à l'intérieur de l'anode (6) de concentration de manière à ce que les centres des sphéroïdes intérieur et extérieur, pratiquement, coincident.

6. Procédé selon la revendication 1, **caractérisé par le fait qu'**on agit sur l'anode (6) de concentration par le faisceau électronique avec l'énergie des électrons allant jusqu'à 1,5 eV, à la densité du courant de $10^8$ / $m^2$ au maximum et à la durée de 50 ns au maximum.

7. Procédé selon la revendication 6, **caractérisé en ce que** la densité du courant dans le faisceau électronique ne dépasse pas $10^7$ / $m^2$.

8. Procédé selon la revendication 1, **caractérisé en ce que** la pression résiduelle dans la chambre sous vide de la DVR est maintenue au niveau de 0,1 P au maximum.

9. Dispositif pour la compression par choc de la matière à base de la DVR ayant:

   le corps (1) imperméable aux gaz robuste dont une partie est fabriquée en matériau électriquement conductible, est réalisée symétrique à l'axe et limite la chambre sous vide, et
   la cathode à plasma, symétrique à l'axe, et l'anode de concentration, symétrique à l'axe, dont, au moins, ladite cathode est connectée à la source d'alimentation de haute voltage à impulsions, installées dans la chambre sous vide, avec le jeu, pratiquement, sur le même axe géométrique,

**caractérisé en ce que**

la cathode (4,5) à plasma est réalisée sous forme de la tige (4), électriquement conductible, avec l'élément (5) diélectrique de bout dont le pourtour du bout arrière, au moins, dans le plan, perpendiculaire à l'axe de symétrie de ladite cathode, d'une manière générale, embrasse le pourtour de ladite tige (4) avec le jeu en continu, et la superficie de la surface émettrice dépasse la superficie maximum de la section transversale de l'anode (6) de concentration, au moins, l'une des électrodes de la DVR est pourvue d'un moyen de régulation de l'écartement des électrodes, et la distance depuis l'axe géométrique commun desdites cathode (4,5) à plasma et anode (6) de concentration jusqu'au côté intérieur de la paroi, électriquement conductible, de la chambre sous vide dépasse $50d_{max}$ où $d_{max}$ est la dimension transversale maximum de l'anode (6) de concentration.

**10.** Dispositif selon la revendication 9, **caractérisé en ce que** la tige (4), électriquement conductible, de la cathode (4,5) à plasma est effilée, et l'élément (5) diélectrique de bout a le trou pour recevoir ladite tige (4) dont la partie de mise en place, ensemble avec la pointe, se trouve à l'intérieur dudit trou.

**11.** Dispositif selon la revendication 9, **caractérisé en ce que** l'anode (6) de concentration a la forme ronde dans sa section transversale et est entièrement réalisée en matériau, électriquement conductible, au niveau du gros de sa masse, à subir la transmutation.

**12.** Dispositif selon la revendication 9, **caractérisé en ce que** l'anode (6) de concentration est réalisée composée et comporte, au moins, la gaine solide à une couche, et embrasse, de façon étanché, par cette gaine, la cible (7) insérée sous forme d'un corps de rotation qui est fabriquée en matériau condensé arbitraire et présente le diamètre, choisi dans les limites $(0,05-0,2)*d_{max}$, où $d_{max}$ est la dimension transversale maximum de l'anode (6) de concentration.

**13.** Dispositif selon la revendication 9, **caractérisé en ce que** dans la queue de l'anode (6) de concentration est installé, au moins, un écran, de préférence, en matériau, électriquement conductible.

**14.** Dispositif selon la revendication 13, **caractérisé en ce que** ledit écran est réalisé sous forme d'un corps de rotation à paroi mince dont le diamètre fait $5d_{max}$ au minimum et qui est distant du bout de cette anode (6), le plus proche de la cathode (4,5) à plasma, jusqu'à $20d_{max}$, où $d_{max}$ est ladite dimension transversale maximum de l'anode (6) de concentration.

**15.** Dispositif selon la revendication 14, **caractérisé en ce que** ledit corps de rotation à paroi mince présente la surface plate ou concave du côté de l'anode (6) de concentration.

**16.** Cathode à plasma, symétrique à l'axe, pour la DVR, ayant la tige (4), électriquement conductible, pour la connexion à la source d'alimentation de haute voltage à impulsions et l'élément (5) diélectrique de bout, **caractérisée en ce que**, au moins, dans le plan, perpendiculaire à l'axe de symétrie de la cathode (4,5), le pourtour du bout arrière de l'élément (5) diélectrique embrasse le pourtour de ladite tige (4) avec le jeu en continu.

**17.** Cathode selon la revendication 16, **caractérisée en ce que** la tige (4), électriquement conductible, est effilée, et l'élément (5) diélectrique de bout a le trou pour recevoir ladite tige (4) dont la partie de mise en place, ensemble avec la pointe, se trouve à l'intérieur dudit trou.

**18.** Cathode selon la revendication 17, **caractérisée en ce que** l'élément (5) diélectrique de bout a le trou borgne.

**19.** Cathode selon la revendication 17, **caractérisée en ce que** l'élément (5) diélectrique de bout a le trou débouchant.

**20.** Cathode selon la revendication 16, **caractérisée en ce que** l'élément (5) diélectrique de bout est fabriqué en matériau, choisi du groupe composé des polymères à chaîne carbonée aux liaisons carbone-carbone simples, des matériaux composites avec des liants organiques du type du pertinax ou du textolite, du bois d'ébène, du mica naturel ou synthétique, des oxydes purs de métaux des groupes III-VII de la table périodique des éléments chimiques de Mendéléiev, des verres non-organiques, des sitals, des diélectriques en céramique et du feutre en fibres de basalte.

**21.** Cathode selon la revendication 16, ou le revendication 17, ou le revendication 18, **caractérisée en ce que** l'élément (5) diélectrique de bout a la surface développée.

**22.** Cathode selon la revendication 16, ou le revendication 17, **caractérisée en ce que**, la dimension transversale minimum dudit élément (5) diélectrique $_{éd\,min}$ = $(5\text{-}10)_{*\,té\,m\,x}$, et la longueur de cet élément $l_{éd}$ = $(10\text{-}20)_{*\,té\,m\,x}$, où $_{té\,m\,x}$ est la dimension transversale maximum de la tige (4), électriquement conductible.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17